Europäisches Patentamt

(19) European Patent Office

Office européen des brevets

(11) Publication number: **0 300 759**

**A1**

(12) **EUROPEAN PATENT APPLICATION**

(21) Application number: **88306642.5**

(22) Date of filing: **20.07.88**

(51) Int. Cl.⁴: **F16L 19/03 , F16L 17/06 , F16L 15/04**

(30) Priority: **20.07.87 US 75167**

(43) Date of publication of application:
**25.01.89 Bulletin 89/04**

(84) Designated Contracting States:
**DE FR GB IT**

(71) Applicant: **DEERE & COMPANY**
**1 John Deere Road**
**Moline Illinois 61265(US)**

(72) Inventor: **Barr, Michael Eugene**
**5660 Sun Valley Drive**
**Dubuque Iowa 52001(US)**

(74) Representative: **Pears, David Ashley**
**REDDIE & GROSE 16 Theobalds Road**
**London WC1X 8PL(GB)**

(54) **Hydraulic coupling having an orifice structure.**

㊿ A first conduit portion (12) has a collar (20) retaining a back nut (16) which couples the first conduit portion (12) to a threaded second conduit portion (14) comprising a union (28). An orifice plate (42) with an orifice (44) is clamped between the two conduit portions (12, 14) and sealed relative to the first portion (12) by an O-ring (54) in a groove (52) in one major surface of the plate (42) and relative to the second portion (14) by an O-ring (40) in a groove (38) in the front surface of the union (28).

FIG. 1

EP 0 300 759 A1

# HYDRAULIC COUPLING HAVING AN ORIFICE STRUCTURE

The present invention is directed to a hydraulic coupling having an orifice structure mounted therein and as set forth in the introductory part of claim 1.

In many hydraulic applications, it is desirable to place an orifice structure in a hydraulic line to create a pressure drop thereacross. Typically, a closed hydraulic fitting is brazed or welded to the hydraulic conduit and a hole drilled in the fitting forming the orifice. Orifice plates can also be welded or brazed to the end of a hydraulic line conduit capping the line. A hydraulic fitting is then brazed or welded to the capped conduit.

The object of the present invention is to provide a hydraulic coupling with a simple, inexpensive orifice structure which allows different size orifices to be readily installed.

The coupling according to the invention is characterized in the manner set forth in claim 1.

The orifice structure provided by the invention is particularly well adapted for low and medium pressure hydraulic systems, and provides a low cost alternative to more conventional orifice structures.

The orifice plate can be readily replaced without significantly affecting the hydraulic integrity of the joint. Different orifice plates having various orifice cross sections can be readily introduced and changed. The thin plate design of the orifice plate also assures better consistency in achieving a sharp edged orifice effect.

The invention will be described in more detail, by way of example, with reference to the accompanying drawings, in which:

Fig. 1 is a cross sectional side view of a hydraulic coupling with an orifice plate, and

Fig. 2 is an exploded view of a portion of the hydraulic coupling.

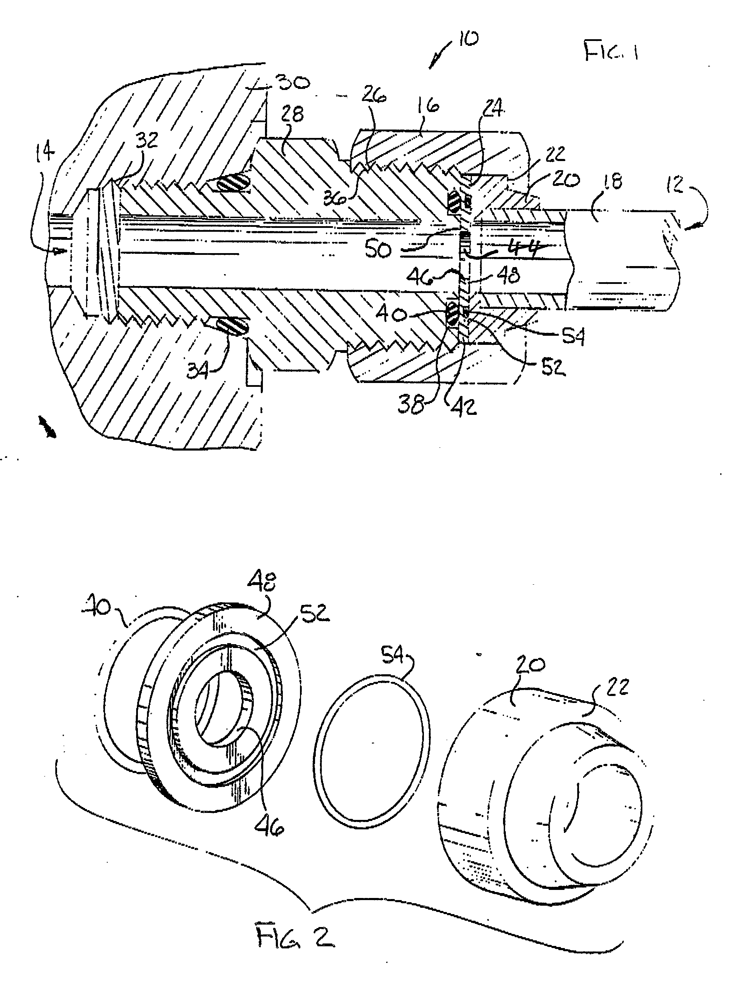

The hydraulic coupling 10 illustrated in FIG. 1 comprises hydraulic conduit portions 12 and 14 which are secured together by a nut 16. The hydraulic conduit portions are coaxial immediate adjacent to one another. The first hydraulic conduit portion 12 comprises conduit 18 which is brazed to a hydraulic fitting 20 provided with a rear shoulder 22 and front sealing face 24. The nut 16 engages the shoulder 22 and is provided with an internal thread 26. The second hydraulic conduit portion 14 comprises a second hydraulic fitting 28 which is screwed (32) into a block 30. An O-ring seal 34 is located between these members. The fitting 28 is provided with an external thread 36 which engages the internal thread 26 of the coupling nut 16. The fitting 28 is also provided with front groove 38 which encircles the cross sectional opening of the conduit, the groove being provided with an O-ring seal 40.

Located between the two conduit portions is an orifice plate 42 which has an opening 43 therethrough creating an orifice. The cross sectional area of the opening 44 is less than the cross sectional areas of the conduit portions. The opening is defined by narrow cylindrical surface 46. The plate has opposite first and second major surfaces 48 and 50. A groove 52 is formed in the first major surface 48 and is provided with O-ring seal 54 which encircles the opening 44 and engages the sealing face 24, forming a fluid tight seal between the orifice plate and the first conduit portion. The second major surface is a flat sealing face that engages the O-ring seal 40 of the second conduit portion for forming a fluid tight seal between the orifice plate and the second conduit portion.

## Claims

1. A hydraulic coupling comprising an orifice (44) between first and second conduit portions (12, 14), characterized in that the orifice (44) is formed in a plate (42) located between the two conduit portions (12, 14), and by first and second sealing means (54 and 40) provided between the plate (42) and the first and second conduit portions (12, 14, respectively).

2. A hydraulic coupling according to claim 1, characterized in that the first sealing means comprises a groove (52) in one of the major surfaces of the plate (42) surrounding the orifice (44) and containing a seal (54), preferably an O-ring seal, which seals the plate (42) relative to the first conduit portion (12).

3. A hydraulic coupling according to claim 1 or 2, characterized in that the second sealing means comprise a groove (38) in the front face of the second conduit portion surrounding the conduit opening and containing a seal (40), preferably an O-ring seal, which engages the other major surface of the plate (42) and seals the plate relative to the second conduit portion (14).

4. A hydraulic coupling according to claim 1, 2 or 3, characterized in that the orifice (44) is circumscribed by a cylindrical edge surface (46) of the plate (42).

5. A hydraulic coupling according to any of claims 1 to 4, characterized in that the orifice (44) is coaxial with the conduits through the two conduit portions (12, 14).

6. A hydraulic coupling according to any of claims 1 to 5, characterized in that the first and second conduit portions (12, 14) are coupled by a nut (16) retained on one portion and engaging a thread (36) on the other portion.

FIG 1

FIG 2

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 88306642.5 |
| A | DE - A1 - 2 553 058 (HOKE INC.) <br> * Totality * <br> -- | 1,4-6 | F 16 L 19/03 <br> F 16 L 17/06 <br> F 16 L 15/04 |
| A | FR - A - 2 215 569 (L'USINE MODERNE DU MARAIS) <br> * Totality * <br> -- | 1,2,4,5 | |
| A | CH - A - 553 940 (E. DUNKEL SEN. UND E. DUNKEL JUN.) <br> ---- | | |

TECHNICAL FIELDS
SEARCHED (Int. Cl.4)

F 16 L 15/00
F 16 L 17/00
F 16 L 19/00

The present search report has been drawn up for all claims

| Place of search | Date of completion of the search | Examiner |
|---|---|---|
| VIENNA | 14-10-1988 | SCHUGANICH |